Europäisches Patentamt

European Patent Office

Office européen des brevets

(19)

(11) Veröffentlichungsnummer: **0 104 617
B1**

## (12) EUROPÄISCHE PATENTSCHRIFT

(45) Veröffentlichungstag der Patentschrift:
**27.01.88**

(51) Int. Cl.⁴: **C 03 C 13/00,** C 03 C 1/00

(21) Anmeldenummer: **83109454.5**

(22) Anmeldetag: **22.09.83**

(54) **Verfahren zur Herstellung einer Vorform zum Ziehen von Glasfaser-Lichtwellenleitern.**

(30) Priorität: **28.09.82 DE 3235869**

(43) Veröffentlichungstag der Anmeldung:
**04.04.84 Patentblatt 84/14**

(45) Bekanntmachung des Hinweises auf die Patenterteilung:
**27.01.88 Patentblatt 88/4**

(84) Benannte Vertragsstaaten:
**AT BE CH DE FR GB IT LI NL SE**

(56) Entgegenhaltungen:
**DD - A - 94 354
GB - A - 1 134 756
GB - A - 2 082 166**

(73) Patentinhaber: **Siemens Aktiengesellschaft Berlin und
München, Wittelsbacherplatz 2, D-8000 München 2 (DE)**

(72) Erfinder: **Schneider, Hartmut, Dr., Blütenstrasse 12,
D-8000 München 40 (DE)**

EP 0 104 617 B1

## Beschreibung

Die vorliegende Erfindung betrifft ein Verfahren zur Herstellung einer Vorform zum Ziehen von Glasfaser-Lichtwellenleitern nach dem Oberbegriff des Patentanspruchs 1.

Ein Verfahren der genannten Art ist beispielsweise aus Electron. Lett. 18 (1982) S. 499–500 bekannt. Dieses Verfahren adaptiert den als Sol-Gel-Methode bekannten Glasherstellungsprozess für die Faserglasherstellung.

Bei bisher bekannten Verfahren (siehe beispielsweise Chem. Ing. Techn. 51 (1979) Seiten 612–627) werden die Vorformen zum Ziehen von Glasfaser-Lichtwellenleitern durch Abscheiden von Glas aus der Gasphase gewonnen. Dabei werden zwar hochwertige Fasern gewonnen, aber die Produktionsrate ist noch niedrig. Geschwindigkeitsbegrenzend ist die Rate, mit der die Faservorform durch Abscheiden von Glas aus der Gasphase gewonnen wird. Bisher wurden Maximalraten, ausgedrückt in äquivalenter Faserlänge, von 5 km/h erzielt.

Für grössere Produktionsraten sind Verfahren der eingangs genannten Art geeignet, welche die Gasphase umgehen. Bei dem bekannten Verfahren dieser Art geht man von einem Siliziumalkoxid, also einem siliziumorganischen Material aus, das in flüssiger Phase hydrolisiert wird und durch Polykondensation der Kieselsäure zu einem grossvolumigen Körper geliert. Durch Trocknen und Sintern lässt sich daraus eine Glasform gewinnen. Vorformen mit vorbestimmten Gradientenprofil lassen sich nach diesem Verfahren jedoch schwerlich gewinnen.

Aus der DD-A-94 354 ist ein Verfahren zur Herstellung von Quarzglasfasern durch Verspinnen von $SiO_2$ liefernden flüssigen Systemen, gegebenenfalls mit einer anschliessenden Temperaturbehandlung bekannt, bei dem eine Spinnlösung verwendet wird, die durch Vermischen von Polyethylenoxid und bestimmten Silanen oder Siloxanen hergestellt wird. Vorformen sind bei diesem Verfahren nicht erforderlich und es ist auch nicht bekannt, ob oder wie sich mit diesem Verfahren Fasern mit vorbestimmten Gradientenprofil gewinnen lassen.

Aus der GB-A-2 082 166 ist ein Verfahren zur Herstellung einer Vorform mit vorbestimmten Gradientenprofil zum Ziehen von Glasfaser-Lichtwellenleitern bekannt, bei dem auf einen Glasdorn mehrere Windungen einer Glasfaser aufgelegt werden, deren Brechzahl sich von Windung zu Windung entsprechend der vorbestimmten Brechzahl ändert.

Aus der GB-A-1 134 756 ist im Zusammenhang mit der Herstellung einer Schutzschicht die Herstellung von Glas aus einer Heteropolysiloxanschicht bekannt, die durch Trocknen einer Lösung hergestellt wurde.

Aufgabe der Erfindung ist es, aufzuzeigen, wie auch bei einem Verfahren der eingangs genannten Art Vorformen mit vorbestimmten Brechzahlprofilen hergestellt werden können.

Diese Aufgabe wird durch die im kennzeichnenden Teil des Patentanspruchs 1 angegebenen Merkmale gelöst.

Gemäss dieser Lösung ist nicht mehr von einem flüssigen, sondern von einem festen siliziumorganischen Material auszugehen.

Besonders geeignet als festes siliziumorganisches Material sind gemäss Anspruch 2 siliziumorganische Verbindungen aus der Klasse der Polysiloxane und/oder Heteropolysiloxane.

Über die Heteropolysiloxane kann die Brechzahl eingestellt werden. Bei ihnen sind die Silizium-Plätze teilweise durch Heteroelemente substituiert, welche die Brechzahl bestimmen.

Insbesondere kommen Heteropolysiloxane in Frage, bei denen die Si-Plätze durch zumindest eines der im Anspruch 3 angegebenen Heteroelemente ersetzt sind.

Ein besonderer Vorteil der Polysiloxane und Heteropolysiloxane, die auch als Silikonkautschuk bekannt sind, liegt darin, dass sie sich frei von Fremdmetallverunreinigungen aus destillierbaren Monomeren, den Alkylchlorsilanen, herstellen lassen.

Zweckmässig kann es sein, wenn das feste siliziumorganische Material feindispersive oxidische Füllstoffe aufweist bzw. mit solchen Stoffen «aufgefüllt» ist.

Bevorzugterweise wird zur Umwandlung des festen siliziumorganischen Materials in Glas der Körper in einer oxidierenden Atmosphäre aufgeheizt, wodurch die C-H-Anteile des siliziumorganischen Materials oxidiert und entfernt werden und $SiO_2$ und gegebenenfalls Oxide der Heteroelemente zurückbleiben, und der dabei entstandene Oxidkörper wird zum Glas gesintert.

Bevorzugterweise wird dabei der Körper in $O_2$-He-Atmosphäre aufgeheizt.

Gemäss Anspruch 20 wird der Oxidkörper bei 1200–1500 °C zum Glas gesintert.

Zur Beseitigung von Wasserspuren ist es zweckmässig, den Oxidkörper, der porös ist, vor dem Sintern mit Chlorgas oder Chlorgas in Helium bei einer Temperatur von 1000–1200 °C zu spülen. Bei diesen Temperaturen bildet sich dabei Chlorwasserstoff, der im Gasstrom aus dem Reaktionsraum transportiert werden kann.

Insbesondere zur Herstellung von Glaskörpern mit vorbestimmtem Brechzahlprofil wird der Wickelkörper aus faden- oder bandförmigem siliziumorganischem Material verwendet.

Vorbestimmte Brechzahlprofile können dadurch voreingestellt werden, dass ein Wickelkörper aus unterschiedlichen Fäden und/oder Bändern verwendet wird. Die Fäden oder Bänder können dabei sowohl hinsichtlich ihres Materials als auch hinsichtlich ihrer Abmessungen oder Querschnittsformen verschieden sein.

Insbesondere für die Herstellung von stabförmigen Vorformen mit radialem Brechzahlprofil zur Herstellung von Gradientenfasern ist ein Verfahren geeignet, bei dem ein Wickelkörper verwendet wird, der lagenweise verschiedene Zusammensetzungen aus unterschiedlichen Fäden und/oder Bändern aufweist. Bei diesem Wickelkörper kann sich die Zusammensetzung aus unterschiedlichen Fäden und/oder Bändern von Lage zu Lage ändern, während sie innerhalb einer Lage konstant sein kann. Das bedeutet bei einem zylinderförmigen Wickelkörper, dass sich die Zusammensetzung aus unterschiedlichen Fäden oder Bändern nur in radialer Richtung ändert, während sie in Längsrichtung konstant bleibt. Diese Eigenschaft bleibt bei der chemischen Umwandlung dieses Körpers in das Glas erhalten.

Vorteilhafte und zweckmässige Wickeltechniken zur Herstellung zylindrischer Wickelkörper gehen aus den Ansprüchen 3 bis 9 hervor. Mit diesen Wickeltechniken lassen sich insbesondere Vorformen für Gradientenfasern herstellen. Insbesondere das Verfahren nach Anspruch 8 oder 9 ist dafür geeignet.

Bevorzugterweise werden für den Wickelkörper Fäden oder Bänder verwendet, die gemäss den Ansprüchen 10 oder 11 hergestellt werden. Dabei dient die Aushärtung unter Verwendung eines zuvor beigemischten Härters zum einen der Formerhaltung des Fadens oder Bandes, und zum anderen wird dadurch ein Verdampfen der Siloxane bei den folgenden Temperaturschritten vermieden.

Bei Verwendung eines Dornes ist es zweckmässig, den Wickelkörper nach der chemischen Umwandlung von dem Dorn zu entfernen. Insbesondere in den Fällen des Anspruchs 6 und einem der Ansprüche 17 bis 20 lässt sich der Oxidkörper nach dem Veraschen der des Trennmittels leicht abziehen.

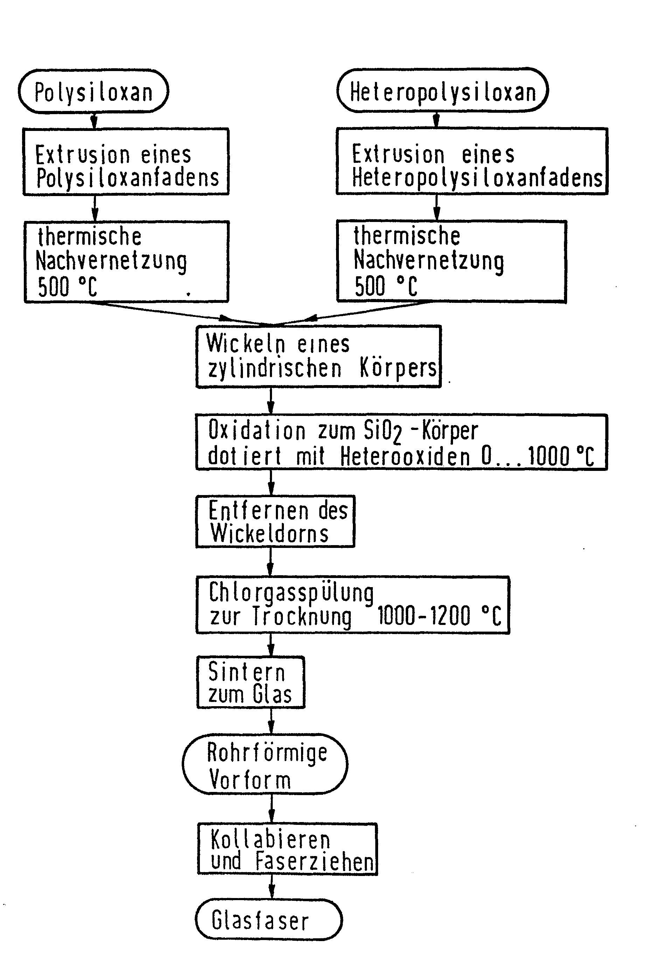

Ein Ausführungsbeispiel der Erfindung wird anhand des in der Figur dargestellten Verfahrensschemas in der folgenden Beschreibung näher erläutert.

Gemäss dem Verfahrensschema werden Polysiloxan und Heteropolysiloxan als Ausgangsstoffe verwendet. Aus dem Polysiloxan wird ein Polysiloxanfaden gespritzt und durch kurzzeitige thermische Nachvernetzung bei 500 °C ausgehärtet.

Ähnlich wird aus dem Heteropolysiloxan durch Extrusion ein Heteropolysiloxanfaden gespritzt, der ebenfalls durch thermische Nachvernetzung bei 500 °C ausgehärtet wird.

Wie schon erwähnt, dient die Aushärtung unter Verwendung eines zuvor beigemischten Härters zum einen der Formerhaltung des Fadens, und zum anderen wird dadurch ein Verdampfen der Siloxane bei folgenden Temperaturschritten vermieden.

Die ausgehärteten Polymerfäden werden auf einen Dorn aufgewickelt. Der Dorn besteht aus einem keramischen Stab, beispielsweise aus $Al_2O_3$, der mit einem dünnen Überzug aus organischem Polymer als Trennmittel versehen worden ist.

Der beim Aufwickeln entstehende Wickelkörper ist ein zylindrischer Körper. Das vorbestimmte radiale Brechzahlprofil bestimmt die Zusammensetzung der aufzuwickelnden Fäden. Soll beispielsweise eine Kern-Mantel-Faser, also eine Faser mit stufenförmigem Brechzahlprofil hergestellt werden, so wird so vorgegangen, dass zunächst ein Polysiloxanfaden und ein Heteropolysiloxanfaden gleichzeitig aufgespult werden, so dass mehrere Lagen mit dieser Fadenzusammensetzung entstehen. Dann wird nur noch ein Polysiloxanfaden aufgespult, so dass mehrere Lagen entstehen, die nur Polysiloxan enthalten. Aus den inneren Lagen aus Polysiloxan und Heteropolysiloxan entsteht später der Kern und aus den äusseren Lagen aus Polysiloxan der Mantel der Faser.

Anstelle zweier Fäden kann auch ein Faden, bestehend aus einer Polysiloxan-Heteropolysiloxan-Mischung extrudiert werden, dessen Zusammensetzung durch eine dem Extruder vorgeschaltete Mischeinheit kontinuierlich verändert wird. Es kann auch ein Verbundfaden mit einem Kern und einem Mantel verwendet werden, der im Kern beispielsweise aus Heteropolysiloxan und im Mantel aus Polysiloxan besteht.

Für die Herstellung der Vorform für eine Gradientenfaser ändert man die Fadenzusammensetzung Lage um Lage allmählich. Beispielsweise beginnt man mit einem hohen Anteil an Heteropolysiloxan, das man nach aussen hin allmählich abnehmen lässt, und legt dann gegebenenfalls nur noch Polysiloxanfäden auf, die später einen Mantel der Gradientenfaser bilden. Den Polysiloxan-Anteil kann man beispielsweise durch den Querschnitt eines gleichzeitig mit einem Polysiloxanfaden aufgelegten Heteropolysiloxanfadens einstellen. Ändert man den Querschnitt des Heteropolysiloxanfadens beim Aufwickeln kontinuierlich, so ändert sich auch der Heteropolysiloxan-Anteil kontinuierlich. Im angegebenen Beispiel kann man demnach mit einem Heteropolysiloxanfaden beginnen, der dicker ist, als der gleichzeitig aufgelegte Polysiloxanfaden und man lässt dann den Durchmesser des Heteropolysiloxanfadens allmählich bis auf Null abnehmen, worauf dann nur noch ein Polysiloxanfaden aufgelegt wird.

Für die Überführung des Kautschuk-Wickelkörpers in einen Glaskörper wird dieser in einer $O_2$- oder $O_2$-He-Atmosphäre aufgeheizt, wodurch die C-H-Anteile des Siloxans durch Oxidation entfernt werden. Zurück bleibt ein Oxidkörper aus $SiO_2$, der gegebenenfalls Oxide der in dem aufgelegten Heteropolysiloxan enthaltenen Heteroelemente enthält. Hierbei ist die hohe Gasdurchlässigkeit in den Fadenzwischenräumen des Wickelkörpers von Vorteil, die eine über den Querschnitt gleichmässigere und raschere Umsetzung gewährleistet. Dadurch wird auch eine Neigung des Körpers zum Abblättern vermindert und eine unerwünschte Siliziumkarbidbildung unterdrückt.

Das Aufheizen des Wickelkörpers wird zweckmässigerweise bei Temperaturen von 300 bis 600 °C langsam (in 3 bis 24 Stunden) durchgeführt. Auf diese Weise kann ein Aufblähen des Siloxans durch zu rasche Entwicklung von Reaktionsgasen vermieden werden, das zu blasigem und voluminösem Material geringer Konsistenz führen würde.

Zweckmässigerweise wird von dem Oxidkörper der Dorn entfernt, der sich nach dem Veraschen des Trennmittels leicht abziehen lässt.

Zur Beseitigung von Wasserspuren wird der poröse Oxidkörper dann mit Chlorgas in Helium gespült. Bei 1000 bis 1200 °C bildet sich dabei Chlorwasserstoff, der im Gasstrom aus dem Reaktionsraum transportiert wird.

Nach der Trocknung wird der Oxidkörper bei 1200 bis 1500 °C zum Glas gesintert. Es resultiert ein transparentes Glasrohr, das nun in einem Ziehofen bei etwa 1900 °C zum Massivstab kollabiert und gleichzeitig zur Glasfaser ausgezogen wird.

Ein Vorteil des vorstehend beschriebenen Verfahrens liegt darin, dass ein gerichteter, scharf gebündelter Materialstrom von hoher Geschwindigkeit zur kalten Vorform hin realisierbar ist.

## Patentansprüche

1. Verfahren zur Herstellung einer Vorform zum Ziehen von Glasfaser-Lichtwellenleitern durch chemische Umwandlung von siliciumorganischem Material in Glas, dadurch gekennzeichnet, dass ein Wickelkörper aus faden- oder bandförmigem siliziumorganischem Material hergestellt und chemisch in einen Glaskörper umgewandelt wird.

2. Verfahren nach Anspruch 1, dadurch gekennzeichnet, dass der Wickelkörper aus unterschiedlichen Fäden und/oder Bändern hergestellt wird.

3. Verfahren nach Anspruch 2, dadurch gekennzeichnet, dass der Wickelkörper lagenweise verschiedene Zusammensetzungen aus unterschiedlichen Fäden und/oder Bändern aufweist.

4. Verfahren nach einem der Ansprüche 1 bis 3, dadurch gekennzeichnet, dass zur Herstellung des Wickelkörpers Polymerfäden und/oder -bänder auf einen Dorn aufgewickelt werden.

5. Verfahren nach Anspruch 4, dadurch gekennzeichnet, dass als Dorn ein keramischer Stab verwendet wird.

6. Verfahren nach Anspruch 14, dadurch gekennzeichnet, dass als Dorn ein Stab aus $Al_2O_3$ verwendet wird.

7. Verfahren nach einem der Ansprüche 4 bis 6, dadurch gekennzeichnet, dass ein Dorn verwendet wird, der einen dünnen Überzug aus organischem Polymer als Trennmittel aufweist.

8. Verfahren nach einem der Ansprüche 4 bis 7, dadurch gekennzeichnet, dass ein Polysiloxanfaden oder auch -band und ein Heteropolysiloxanfaden oder auch -band gleichzeitig und/oder ein aus einer Polysiloxan-Heteropolysiloxan-Mischung konstanter oder variabler Zusammensetzung bestehender Faden oder auch bestehendes Band und/oder ein Verbundfaden oder auch -band mit einem Kern und einem Mantel auf den Dorn aufgewickelt werden bzw. wird, wobei der Kern aus Heteropolysiloxan oder Polysiloxan und der Mantel aus Polysiloxan bzw. Heteropolysiloxan besteht.

9. Verfahren nach einem der Ansprüche 4 bis 8 oder 2 und einem der Ansprüche 4 bis 8, dadurch gekennzeichnet, dass beim Aufwickeln mit einem hohen Anteil an Heteropolysiloxan-fasern oder auch -bändern begonnen wird, und dass dann dieser Anteil allmählich reduziert wird.

10. Verfahren nach Anspruch 9, dadurch gekennzeichnet, dass ein Polysiloxanfaden oder auch -band und ein dickerer Heteropolysiloxanfaden oder auch dickeres Heteropolysiloxanband gleichzeitig aufgewickelt werden und dass der dadurch erzeugte hohe Heteropolysiloxananteil durch Querschnittsänderung reduziert wird.

11. Verfahren nach Anspruch 10, dadurch gekennzeichnet, dass nach Reduzierung des hohen Heteropolysiloxananteils durch Querschnittsänderung nur noch Polysiloxanfäden oder auch -bänder aufgelegt werden.

12. Verfahren nach einem der vorhergehenden Ansprüche, dadurch gekennzeichnet, dass ein Faden oder Band aus siliziumorganischem Material verwendet wird, der bzw. das durch Extrusion hergestellt und durch nachfolgende thermische Behandlung ausgehärtet worden ist.

13. Verfahren nach Anspruch 12, dadurch gekennzeichnet, dass ein Faden oder Band aus einer Polysiloxan-Heteropolysiloxan-Mischung extrudiert wird, deren Zusammensetzung durch eine dem Extruder vorgeschaltete Mischeinheit eingestellt oder auch verändert wird.

14. Verfahren nach einem der vorhergehenden Ansprüche, dadurch gekennzeichnet, dass nach der chemischen Umwandlung des Wickelkörpers der Dorn entfernt wird.

15. Verfahren nach einem der vorhergehenden Ansprüche, dadurch gekennzeichnet, dass Heteropolysiloxane verwendet werden, bei denen die Si-Plätze oder $O_2$-Plätze im Falle von Fluor durch zumindest eines der Heteroelemente B, Al, Ga, Ge, Sn, Pb, P, Sb, As, F, Ti, Zr, Nb, Ta, Sc, Y ersetzt sind.

16. Verfahren nach einem der vorhergehenden Ansprüche, dadurch gekennzeichnet, dass das feste siliziumorganische Material einen oder mehrere feindispersive oxidische Füllstoffe aufweist.

17. Verfahren nach einem der vorhergehenden Ansprüche, dadurch gekennzeichnet, dass zur Umwandlung des festen siliziumorganischen Materials in Glas der Wickelkörper in einer oxidierenden Atmosphäre aufgeheizt wird, wodurch die C-H-Anteile des siliziumorganischen Materials oxidiert und entfernt werden und $SiO_2$ oder $SiO_2$ und Oxide der Heteroelemente zurückbleiben, und dass der dabei entstandene Oxidkörper zum Glas gesintert wird.

18. Verfahren nach Anspruch 17, dadurch gekennzeichnet, dass der Wickelkörper in $O_2$- oder $O_2$-He-Atmosphäre aufgeheizt wird.

19. Verfahren nach Anspruch 18, dadurch gekennzeichnet, dass das Aufheizen bei Temperaturen von 300 °C bis 600 °C langsam durchgeführt wird.

20. Verfahren nach einem der Ansprüche 17 bis 19, dadurch gekennzeichnet, dass der Oxidkörper bei 1200 bis 1500 °C zum Glas gesintert wird.

21. Verfahren nach einem der Ansprüche 17 bis 20, dadurch gekennzeichnet, dass vor dem Sintern der Oxidkörper mit Chlorgas oder Chlorgas in Helium bei einer Temperatur von 1000 °C bis 1200 °C gespült wird.

## Claims

1. A process for the production of a preform for drawing optical glass fibres, by the chemical conversion of organo-silicon material into glass, characterised in that a wound body is produced from filamentary or ribbon-shaped organo-silicon material and is chemically converted into a glass body.

2. A process as claimed in Claim 1, characterised in that the wound body is produced from different filaments and/or ribbons.

3. A process as claimed in Claim 2, characterised in that the wound body comprises layers made of different combinations of different filaments and/or ribbons.

4. A process as claimed in one of Claims 1 to 3, characterised in that the wound body is produced by winding polymer filaments and/or ribbons onto a mandrel.

5. A process as claimed in Claim 4, characterised in that a ceramic rod is used as mandrel.

6. A process as claimed in Claim 4, characterised in that a rod made of $Al_2O_3$ is used as mandrel.

7. A process as claimed in one of Claims 4 to 6, characterised in that a mandrel is used which is provided with a thin coating of an organic polymer as parting agent.

8. A process as claimed in one of Claims 4 to 7, characterised in that there are/is wound onto the mandrel a polysiloxane filament or ribbon simultaneously with a heteropolysiloxane filament or ribbon, and/or a filament or ribbon made of a polysiloxane-heteropolysiloxane mixture of constant or variable composition, and/or a compound filament or ribbon comprising a core and a casing, the core consisting of heteropolysiloxane or polysiloxane and the casing consisting of polysiloxane or heteropolysiloxane, as the case may be.

9. A process as claimed in one of Claims 4 to 8, or 2 and one of Claims 4 to 8, characterised in that a high proportion of heteropolysiloxane filaments or ribbons is used at the start of the winding process and that this proportion is then gradually reduced.

10. A process as claimed in Claim 9, characterised in that a polysiloxane filament or ribbon and a thicker heteropolysiloxane filament or ribbon are simultaneously wound, and that the high heteropolysiloxane proportion first produced is reduced by an alteration in the cross-section.

11. A process as claimed in Claim 10, characterised in that after the reduction of the high heteropolysiloxane proportion by alteration of the cross-section, only polysiloxane filaments or ribbons are applied.

12. A process as claimed in one of the preceding Claims, characterised in that a filament or ribbon made of organo-silicon material is used which has been produced by extrusion and hardened by subsequent thermal treatment.

13. A process as claimed in Claim 12, characterised in that a filament or ribbon is extruded from a polysiloxane-heteropolysiloxane mixture, the composition of which is set or varied by a mixing unit which is arranged in series with the extruder.

14. A process as claimed in one of the preceding Claims, characterised in that after the chemical conversion of the wound body, the mandrel is removed.

15. A process as claimed in one of the preceding Claims, characterised in that heteropolysiloxanes are used in which the Si-positions or the $O_2$-positions in the case of fluorine, are substituted by at least one of the hetero-elements B, Al, Ga, Ge, Sn, Pb, P, Sb, As, F, Ti, Zr, Nb, Ta, Sc, Y.

16. A process as claimed in one of the preceding Claims, characterised in that the solid organo-silicon material contains one or more finely-dispersed oxidic fillers.

17. A process as claimed in one of the preceding Claims, characterised in that in order to convert the solid organo-silicon material into glass, the wound body is heated in an oxidising atmosphere, as a result of which the C-H constituents of the organo-silicon material are oxidised and removed, and $SiO_2$, or $SiO_2$ and oxides of the hetero-elements, remain; and that the oxide body thus produced is sintered to form glass.

18. A process as claimed in Claim 17, characterised in that the wound body is heated in a $O_2$- or $O_2$-He-atmosphere.

19. A process as claimed in Claim 18, characterised in that the heating is carried out slowly at temperatures of 300 °C to 600 °C.

20. A process as claimed in one of Claims 17 to 19, characterised in that the oxide body is sintered at 1200 to 1500 °C to form glass.

21. A process as claimed in one of Claims 17 to 20, characterised in that, prior to the sintering, the oxide body is flushed with chlorine gas, or chlorine gas in helium, at a temperature of 1000 °C to 1200 °C.

## Revendications

1. Procédé pour fabriquer une préforme destinée à l'étirage de fibres de verre-guides d'ondes optiques, par transformation de matériau silico-organique en verre, caractérisé en ce que l'on produit un corps bobiné de matériau silico-organique en forme de fil ou de ruban, que l'on transforme ensuite chimiquement en un corps de verre.

2. Procédé selon la revendication 1, caractérisé en ce que l'on produit le corps bobiné de différents fils et/ou rubans.

3. Procédé selon la revendication 2, caractérisé en ce que le corps bobiné possède des compositions qui diffèrent suivant les couches et qui sont obtenues à partir de fils et/ou rubans différents.

4. Procédé selon une des revendications 1 à 3, caractérisé en ce que l'on enroule des fils et/ou des rubans de polymère sur un mandrin pour produire le corps bobiné.

5. Procédé selon la revendication 4, caractérisé en ce que l'on utilise un barreau céramique comme mandrin.

6. Procédé selon la revendication 4, caractérisé en ce que l'on utilise un barreau en Al$_2$O$_3$ comme mandrin.

7. Procédé selon une des revendications 4 à 6, caractérisé en ce que l'on utilise un mandrin qui porte un mince revêtement en polymère organique comme agent de séparation.

8. Procédé selon une des revendications 4 à 7, caractérisé en ce que l'on enroule sur le mandrin un fil ou un ruban de polysiloxane et en même temps un fil ou un ruban d'hétéro-polysiloxane et/ou un fil ou un ruban formé d'un mélange d'hétéro-polysiloxane, de composition constante ou variable, et/ou un fil ou un ruban composite, possédant un cœur et une gaine, le cœur étant en hétéro-polysiloxane ou en polysiloxane et la gaine étant en polysiloxane ou en hétéro-polysiloxane.

9. Procédé selon une des revendications 4 à 8 ou la revendication 2 et une des revendications 4 à 8, caractérisé en ce que, lors de l'enroulement, on commence par une forte proportion en fibres ou rubans d'hétéro-polysiloxane et que l'on réduit ensuite cette proportion de façon progressive.

10. Procédé selon la revendication 9, caractérisé en ce que l'on enroule simultanément un fil ou un ruban de polysiloxane et un fil plus épais ou un ruban plus épais d'hétéro-polysiloxane et que l'on réduit la forte proportion d'hétéro-polysiloxane ainsi produite en changeant la section.

11. Procédé selon la revendication 10, caractérisé en ce que, après la réduction de la forte proportion d'hétéro-polysiloxane par changement de la section, on n'applique plus que des fils ou des rubans de polysiloxane.

12. Procédé selon une des revendications précédentes, caractérisé en ce que l'on utilise un fil ou un ruban de matériau silico-organique, qui est produit par extrusion par exemple et qui a été durci par un traitement thermique consécutif.

13. Procédé selon la revendication 12, caractérisé en ce que l'on extrude un fil ou un ruban d'un mélange de polysiloxane et d'hétéro-polysiloxane, dont la composition est ajustée ou modifiée au moyen d'une unité de mélange prévue en amont de l'extrudeuse.

14. Procédé selon une des revendications précédentes, caractérisé en ce que l'on retire le mandrin après la transformation chimique du corps bobiné.

15. Procédé selon une des revendications précédentes, caractérisé en ce que l'on utilise des hétéro-polysiloxanes dont les positions Si ou les positions O$_2$ sont remplacées, dans le cas de fluor, par au moins l'un des hétéro-éléments B, Al, Ga, Ge, Sn, Pb, P, Sb, As, F, Ti, Zr, Nb, Ta, Sc, Y.

16. Procédé selon une des revendications précédentes, caractérisé en ce que le matériau silico-organique solide présente une ou plusieurs charges oxydes finement dispersées.

17. Procédé selon une des revendications précédentes, caractérisé en ce que, pour transformer le matériau silico-organique solide en verre, on réchauffe le corps bobiné dans une atmosphère oxydante, ce qui provoque l'oxydation et l'élimination des fractions C-H du matériau silico-organique, de sorte qu'il reste SiO$_2$ ou SiO$_2$ et des oxydes des hétéro-éléments, et que l'on transforme le corps d'oxyde ainsi formé en verre par frittage.

18. Procédé selon la revendication 17, caractérisé en ce que l'on réchauffe le corps bobiné dans une atmosphère de O$_2$ ou O$_2$-He.

19. Procédé selon la revendication 18, caractérisé en ce que l'on effectue le réchauffage lentement à des températures de 300 °C à 600 °C.

20. Procédé selon une des revendications 17 à 19, caractérisé en ce que l'on effectue la transformation par frittage du corps d'oxyde en verre à une température de 1200 °C à 1500 °C.

21. Procédé selon une des revendications 17 à 20, caractérisé en ce que, avant le frittage, on soumet le corps d'oxyde à un balayage ou un lavage avec du chlore gazeux ou du chlore gazeux dans l'hélium à une température de 1000 °C à 1200 °C.

```
┌─────────────────┐                        ┌──────────────────────┐
│   Polysiloxan   │                        │   Heteropolysiloxan  │
└─────────────────┘                        └──────────────────────┘
         │                                           │
         ▼                                           ▼
┌─────────────────┐                        ┌──────────────────────┐
│ Extrusion eines │                        │ Extrusion eines      │
│ Polysiloxanfadens│                       │ Heteropolysiloxanfadens│
└─────────────────┘                        └──────────────────────┘
         │                                           │
         ▼                                           ▼
┌─────────────────┐                        ┌──────────────────────┐
│ thermische      │                        │ thermische           │
│ Nachvernetzung  │                        │ Nachvernetzung       │
│ 500 °C          │                        │ 500 °C               │
└─────────────────┘                        └──────────────────────┘
              \                              /
               ▼                            ▼
        ┌──────────────────────────┐
        │ Wickeln eines            │
        │ zylindrischen Körpers    │
        └──────────────────────────┘
                    │
                    ▼
        ┌────────────────────────────────────────┐
        │ Oxidation zum SiO₂-Körper              │
        │ dotiert mit Herooxiden 0...1000 °C     │
        └────────────────────────────────────────┘
                    │
                    ▼
        ┌──────────────────┐
        │ Entfernen des    │
        │ Wickeldorns      │
        └──────────────────┘
                    │
                    ▼
        ┌─────────────────────────────────┐
        │ Chlorgasspülung                 │
        │ zur Trocknung  1000–1200 °C     │
        └─────────────────────────────────┘
                    │
                    ▼
        ┌──────────────┐
        │ Sintern      │
        │ zum Glas     │
        └──────────────┘
                    │
                    ▼
        ┌──────────────┐
        │ Rohrförmige  │
        │ Vorform      │
        └──────────────┘
                    │
                    ▼
        ┌──────────────────┐
        │ Kollabieren      │
        │ und Faserziehen  │
        └──────────────────┘
                    │
                    ▼
        ┌──────────────┐
        │  Glasfaser   │
        └──────────────┘
```

Oxidation zum $SiO_2$-Körper dotiert mit Herooxiden 0...1000 °C

7